# EUROPÄISCHE PATENTANMELDUNG

(11) **EP 2 664 455 A1**
(43) Veröffentlichungstag der Anmeldung: **20.11.2013**
(21) Anmeldenummer: 13165681.1
(22) Anmeldetag: 29.04.2013
(51) Int. Cl.: B32B 21/04, B32B 3/08, E04C 2/38

(54) **Plattenförmige Tragstruktur**

(30) Priorität: 14.05.2012 DE 102012208017
(71) Anmelder: Thermoplast Composite GmbH, 91474 Langenfeld (DE)
(72) Erfinder: Börger, Herbert, Dr., 91474 Langenfeld (DE)
(74) Vertreter: Rau, Schneck & Hübner

(57) **Zusammenfassung**

Eine plattenförmige Tragstruktur hat Faserverbund-Rahmenleisten (2) aus faserverstärktem Kunststoff, die um einen Tragstruktur-Zentralbereich umlaufen. Die Faserverbund-Rahmenleisten (2) liegen in einer gemeinsamen Plattenebene in einem Kernbereich (7) der Tragstruktur. Der Kernbereich (7) der Tragstruktur ist beiderseits abgedeckt von Deckplatten (8, 9), die sowohl den Zentralbereich als auch die Faserverbund-Rahmenleisten (2) abdecken. Die Deckplatten (8, 9) sind kraftübertragend mit den Rahmenleisten (2) verbunden. Es resultiert eine Tragstruktur, die Biege-und Torsionsbeanspruchungen ohne unerwünschte Verformungen standhält.

## Beschreibung

Die Erfindung betrifft eine plattenförmige Tragstruktur.

Eine derartige plattenförmige Tragstruktur ist druckschriftlich vorbekannt beispielsweise aus der WO 2009/103474 A1 und zudem in vielfacher Form durch offenkundige Vorbenutzung, beispielsweise als Türblatt einer Haustür. Die DE 10 2004 025 667 A1 beschreibt ein Kernmaterial für Leichtbaukonstruktionen in Mehrschichtbauweise. Die DE 196 06 195 A1 beschreibt eine Faltwabe aus zusammenhängendem Flachmaterial sowie ein Herstellungsverfahren hierfür. Die DE 198 12 747 B4 beschreibt ein Konstruktionselement mit armiertem Stützkern.

Es ist eine Aufgabe der vorliegenden Erfindung, eine Tragstruktur derart weiterzubilden, dass die Tragstruktur Biege-und Torsionsbeanspruchungen ohne unerwünschte Verformungen standhält.

Diese Aufgabe ist erfindungsgemäß gelöst durch eine Tragstruktur mit den im Anspruch 1 angegebenen Merkmalen.

Die Faserverbund-Rahmenleisten der Tragstruktur bilden einen Versteifungsrahmen. Biege-und Torsionskräfte, die auf die Tragstruktur wirken, werden über die Deckplatten und die kraftübertragende Verbindung auf die Rahmenleisten übertragen. Die Rahmenleisten können diese Kräfte dann aufnehmen. Dies führt dazu, dass Biege- bzw. Torsionsbeanspruchungen nicht zu einer unerwünschten Verformung, insbesondere nicht zu einer Verbiegung oder einem Verzug, der Tragstruktur führen. Die Kraftübertragung zwischen den Deckplatten und den Rahmenleisten erfolgt aufgrund von deren kraftübertragender Verbindung ohne die Notwendigkeit, dass die Rahmenleisten endseitig miteinander verbunden sind. Dies führt zu einer wesentlichen Vereinfachung einer Herstellung des Tragstruktur-Versteifungsrahmens beispielsweise im Vergleich zu einem umlaufenden Stahlprofil-Versteifungsrahmen mit Verschweißungen im Rahmen-Eckenbereich. Die Rahmenleisten können einen derartigen Stahlrahmen ersetzen. Ein Rahmenverzug, der beim Verschweißen der Stahlleisten des bekannten Stahlrahmens auftreten kann, entfällt. Die Tragstruktur eignet sich damit besonders zum Einsatz als Türblatt-Rohling, z.B. für Haustüren. Die Deckplatten sowie weitere Strukturelemente im Kernbereich der Tragstruktur können aus Holz gefertigt sein. Aufgrund der Widerstandsfähigkeit der Tragstruktur gegen Biegungs-bzw. Torsionsbeanspruchung ergibt sich kein unerwünschter Verzug dieser Holz-Strukturelemente. Die Deckplatten können aus Holz, aus Holzfasermaterialen, z.B. ausgeführt als mitteldichte Holzfaserplatten (MDF), oder aus Sperrholz gefertigt sein. Alternativ können die Deckplatten auch aus einem anderen Material, z.B. aus Metall, insbesondere aus Aluminium gefertigt sein. Die Deckplatten können in Form eines Blechs oder auch in Form einer Folie gestaltet sein, die einer entsprechenden Flächen-Zugbeanspruchung standhalten muss. Im Vergleich zu einem Stahlrahmen kann die Tragstruktur mit vergleichbarem Gewicht oder sogar leichter ausgeführt sein. Eine Wärmebrücke, die beim Stahlrahmen gegeben ist, entfällt beim Versteifungsrahmen aus den Faserverbund-Rahmenleisten. Biege- und Torsionsbeanspruchungen, denen die Tragstruktur ohne unerwünschte Verformungen standhalten kann, können einerseits aus funktionsbedingten äußeren Lasten resultieren, alternativ oder zusätzlich aber auch aus inneren Spannungen der Struktur, die beispielsweise aus klimatischen Einflüssen resultieren und zu einem Verzug führen können. Ein derartiger Verzug kann insbesondere in einzelnen Holz-Komponenten entstehen, die die Tragstruktur aufweist.

Eine Endlos-Faserverstärkung nach Anspruch 2 ergibt je nach Ausgestaltung besonders zugfeste, besonders biegefeste und/oder besonders torsionsfeste Faserverbund-Rahmenleisten. Die Endlos-Faserverstärkung kann unidirektional ausgeführt sein. Die Endlos-Faserverstärkung kann hinsichtlich eines Winkels α der Faserrichtung zur Leisten-Längsrichtung als +α/-α - Struktur, insbesondere als +α/-α -Schichtstruktur ausgeführt sein. α kann im Bereich zwischen 20° und 70° liegen, insbesondere im Bereich zwischen 30° und 60°, insbesondere im Bereich zwischen 40° und 50° und insbesondere im Bereich von 45°. Die Endlos-Faserverstärkung kann alternativ unidirektional in Leistenrichtung (α = 0) ausgeführt sein. Bei einer weiteren Variante kann die Endlos-Faserverstärkung einerseits mit +α/-α-Schichten und andererseits mit 0°-Schichten, also Schichten mit einem Winkel α = 0 der Faserrichtung zur Leisten-Längsrichtung, ausgeführt sein. Die Auswahl der jeweiligen Faserrichtungs-Variante kann erfolgen, je nach dem, ob eine Biege- oder eine Torsionskomponente einer Kraftbeanspruchung abgestützt werden soll. Ein E-Modul der Rahmenleisten kann um ein Vielfaches höher sein als ein E-Modul der Deckplatten. Die Faserverstärkung kann als Glasfaserverstärkung ausgeführt sein.

Zusätzliche Kohlefaser-Verstärkungsprofilelemente nach Anspruch 3 führen zu einer weiteren Verstärkung der Rahmenleisten, so dass diese entweder höheren Belastungswerten standhalten können oder insgesamt geringer dimensioniert ausgeführt sein können. Die Kohlefaser-Verstärkungsprofilelemente können ebenfalls unidirektional ausgerichtete Fasern oder Fasern in Form einer +α/-α -Struktur aufweisen. Die Kohlefaser-Verstärkungsprofilelemente können mit einem sonstigen Faserverbundprofil der Faserverbund-Rahmenleisten stoffschlüssig verbunden sein. Schubübertragungs-Leisten nach Anspruch 4 führen zu einer verbesserten Kraftanbindung der Rahmenleisten an die Deckplatten, da sie Spannungen aus dem Profil der Rahmenleisten großflächig auf die Deckplatten überleiten und damit lokale Verformungen der Tragstruktur insgesamt und besonders des Kernbereichs vermeiden. Die Schubübertragungs-Leisten sind im Tragstruktur-Zentralbereich, also innerhalb des durch die Faserverbund-Rahmenleisten gebildeten Versteifungsrahmens, und außerhalb des durch die Faserverbund-Rahmenleisten gebildeten Versteifungsrahmens angeordnet. Die Schubübertragungs-Leisten können als Holzbalken oder als Holzleisten ausgeführt sein. Ein E-Modul der Schubübertragungs-Leisten kann um ein Vielfaches höher sein als das E-Modul der Deckplatten. Die Schubübertragungs-Leisten können vollflächig mit den Rahmenleisten und/oder mit den Deckplatten verklebt sein.

Hohlprofil-Leisten nach Anspruch 5 ergeben einen guten Kompromiss aus Kraft-Beanspruchbarkeit und Gewicht. Die Faserverbund-Rahmenleisten können als Zweikammer-Profil, als Einkammer-Profil oder als Mehrkammer-Profil ausgeführt sein. Die Hohlkammern können mit Material gefüllt sein, z.B. mit Schalldämmmaterial oder auch mit Wärmedämmmaterial.

Eine Matrix nach Anspruch 6 ergibt Faserverbund-Rahmenleisten, die eine günstige Eigenschaftskombination hinsichtlich Beanspruchbarkeit und Herstellungskosten haben. Bei der Matrix kann es sich um eine Matrix aus SAN oder um eine Matrix aus SAN/PC handeln.

Eine vollflächige Verklebung nach Anspruch 7 führt zu einer besonders günstigen Kraftübertragung zwischen den Deckplatten und den Rahmenleisten. Die Rahmenleisten können dabei zusammen mit Schubübertragungs-Leisten nach Anspruch 4 vollflächig mit den Deckplatten verklebt sein.

Eine Tragstruktur nach Anspruch 8 hat Vorteile, die vorstehend im Zusammenhang mit der Tragstruktur nach Anspruch 1 bereits erläutert wurden.

Rahmenleisten nach Anspruch 9 haben eine Gesamterstreckung längs einer Dimension der Tragstruktur, die mindestens die Hälfte einer Gesamterstreckung der Tragstruktur längs dieser Dimension beträgt. Ein Verhältnis zwischen der Erstreckung der Rahmenleiste längs dieser Dimension und der Gesamterstreckung der Tragstruktur längs dieser Dimension ist also ≥ 0,5, kann aber auch 0,6, 0,7, 0,8 oder 0,9 betragen oder noch größer sein. Die Faserverbund-Rahmenleisten verstärken also die Tragstruktur längs eines erheblichen Teils von deren Gesamterstreckung, was zur effektiven Aufnahme von Biege- und Torsionskräften, die auf die Tragstruktur wirken, durch die Faserverbund-Rahmenleisten führt.

Ausführungsbeispiele der Erfindung werden nachfolgend anhand der Zeichnung näher erläutert. In dieser zeigen:
- Fig. 1: eine Aufsicht auf eine plattenförmige Tragstruktur in Form eines Türblatt-Rohlings, wobei eine dem Betrachter zugewandte Deckplatte sowie Strukturelemente im Kernbereich sowie im Bereich um dargestellte Faserverbund-Rahmenleisten herum nicht gezeigt sind;
- Fig. 2: vergrößert einen Schnitt gemäß Linie II-II in Fig. 1;
- Fig. 2a: perspektivisch einen Ausschnitt der Tragstruktur im Bereich der Rahmenleiste nach Fig. 2, wobei eine obere Deckplatte weggelassen ist;
- Fig. 3: in einer einem Ausschnitt der Fig. 2 ähnlichen Darstellung eine weitere Variante einer Faserverbund-Rahmenleiste mit zusätzlichen Kohlefaser-Verstärkungsprofilelementen;
- Fig. 3a: die Ausführung nach Fig. 3 in einer nach Fig. 2a ähnlichen Darstellung;
- Fig. 4: schematisch eine Ausrichtungsvariante für Endlos-Fasern einer Faserverstärkung der Faserverbund-Rahmenleisten, wobei ein Ausschnitt gemäß Linie III-III in Fig. 2 dargestellt ist;
- Fig. 5: in einer zur Fig. 4 ähnlichen Darstellung eine weitere Ausführung einer Faserverstärkung einer Faserverbund-Rahmenleiste der Tragstruktur; und
- Fig. 6: in einer zur Fig. 2 ähnlichen Darstellung eine weitere Hohlprofil-Ausführung der Faserverbund-Rahmenleiste.

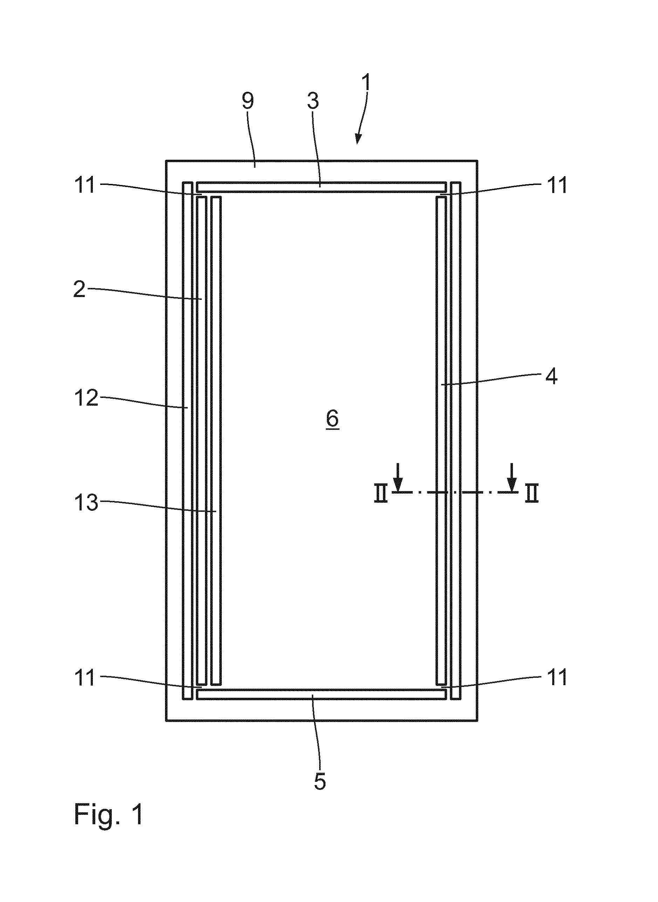

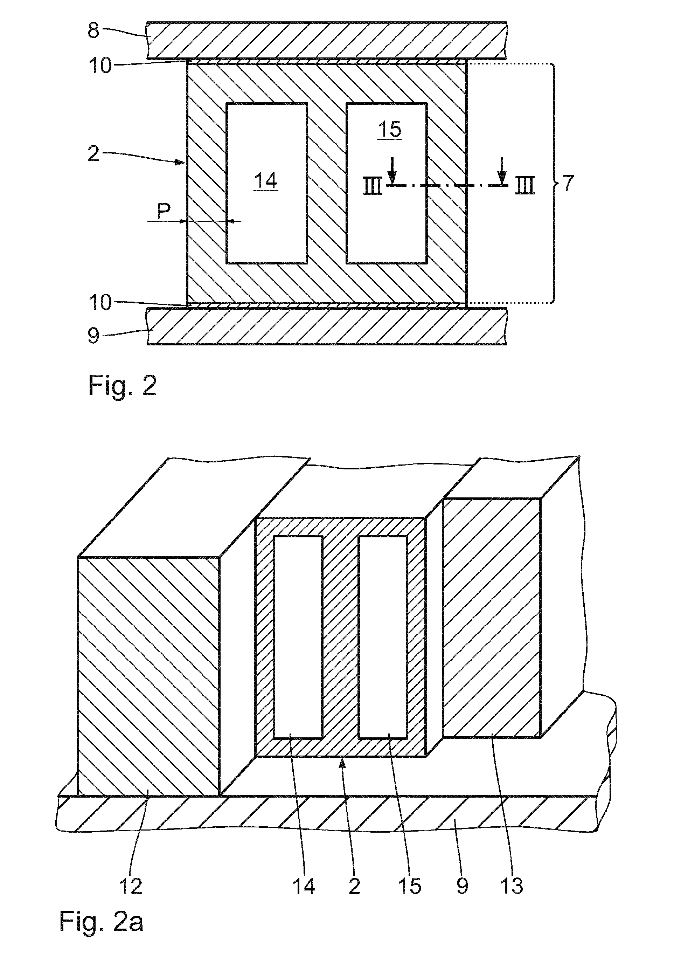

Fig. 1 zeigt Haupt-Strukturelemente einer plattenförmigen Tragstruktur 1, die insgesamt als Türblatt-Rohling z.B. für Haustüren oder auch für sonstige Türen zum Einsatz kommen kann. Die Tragstruktur 1 hat Faserverbund-Rahmenleisten 2, 3, 4, 5 aus faserverstärktem Kunststoff. Die Rahmenleisten 2 bis 5 laufen um einen Zentralbereich 6 der Tragstruktur 1. Die Rahmenleisten 2 bis 5 liegen in einer gemeinsamen Plattenebene in einem Kernbereich 7 (vgl. Fig. 2), also einer mittleren Plattenschicht, der Tragstruktur 1. Die Plattenebene verläuft parallel zur Zeichenebene nach Fig. 1.

Der Kernbereich 7 der Tragstruktur 1 ist beiderseits abgedeckt von Deckplatten 8, 9. Diese decken sowohl den Zentralbereich 6 als auch die Rahmenleisten 2 bis 5 ab. Dies wird anhand der Fig. 1 deutlich, die eine der beiden Deckplatten, nämlich die unter den Rahmenleisten 2 bis 5 liegende Deckplatte 9, zeigt. Diese Deckplatte 9 steht nach außen über die Rahmenleisten 2 bis 5 über. Die andere, in der Fig. 1 nicht dargestellte Deckplatte 8 hat die gleiche Flächenerstreckung und die gleiche Stärke wie die Deckplatte 9 und ist fluchtend zur Deckplatte 9 angeordnet, so dass die Rahmenleisten 2 bis 5 zwischen den Deckplatten 8 und 9 aufgenommen sind.

Die Deckplatten 8, 9 sind kraftübertragend mit den Rahmenleisten 2 bis 5 verbunden. Hierzu sind die Rahmenleisten 2 bis 5 über Kleberschichten 10 (vgl. Fig. 2) vollflächig mit den Deckplatten 8, 9 verklebt.

Die Rahmenleisten 2 bis 5 bilden einen Versteifungsrahmen der Tragstruktur 1. Ein Kraftfluss in Bezug auf eine Biegungs-bzw. Torsionsbeanspruchung der Tragstruktur 1 findet zwischen den Rahmenleisten 2 bis 5 über die Deckplatten 8, 9 statt. Es ist daher bei der Ausgestaltung des Versteifungsrahmens nicht zwingend, die Rahmenleisten 2 bis 5 endseitig miteinander zu verbinden. Bei der Ausführung des Versteifungsrahmens nach Fig. 1 verbleibt zwischen den Enden der längeren Rahmenleisten 2 und 4 und den diesen benachbarten Enden der kürzeren Rahmenleisten 3 und 5 jeweils ein freier Zwischenraum 11. Bei der Ausführung nach Figur 1 sind die Rahmenleisten 2 bis 5 endseitig, also nicht in kraftübertragender Weise, miteinander verbunden.

Die Rahmenleisten 2 bis 5 haben insgesamt ein rechteckiges Leistenprofil mit einer typischen Kantenlänge im Bereich zwischen 25 mm und 50 mm, insbesondere im Bereich zwischen 30 und 40 mm, insbesondere im Bereich von 35 mm.

Die Rahmenleisten 2 bis 5 haben eine Länge von 1m bis 3m, insbesondere im Bereich von 1,5m bis 2,5m. Die Länge der Rahmenleisten 2 bis 5 ist relativ geringfügig kleiner als eine Gesamterstreckung der Tragstruktur 1 längs der Erstreckung der jeweiligen Rahmenleiste 2 bis 5. Bei der Ausführung nach Figur 1 ist ein Verhältnis zwischen der Länge der Rahmenleisten 2 bis 5 und der jeweiligen Erstreckung der Tragstruktur 1 längs dieser Längendimension größer als 0,5 und sogar größer als 0,8. Die Rahmenleisten 2 bis 5 können als Endlos-Leisten vorgefertigt und entsprechend dem jeweils geforderten Längenmaß konfektioniert sein.

Die Deckplatten 8, 9 sind aus Holz gefertigt. Alternativ können die Deckplatten 8, 9 aus Aluminium, insbesondere aus Aluminiumblech oder Aluminiumfolie, ebenfalls aus einem Faserverbundwerkstoff, aus Holzfasermaterial, z.B. ausgeführt als mitteldichte Holzfaserplatte (MDF), oder aus Sperrholz gefertigt sein.

Anliegend an zumindest eine der Rahmenleisten 2 bis 5 können jeweils zwei Schubübertragungs-Leisten 12, 13 angeordnet sein. Die Schubübertragungs-Leisten 12, 13 nehmen jeweils eine der Rahmenleisten 2 bis 5, in der Darstellung nach Fig. 1 die Rahmenleiste 2, in der Plattenebene zwischen sich auf. Die Schubübertragungs-Leisten 12, 13 verlaufen dabei parallel zur Rahmenleiste 2. Die Schubübertragungs-Leisten 12, 13 sind ebenfalls zwischen den Deckplatten 8, 9 aufgenommen. Eine Stärke der Schubübertragungs-Leisten 12, 13 zwischen den Deckplatten 8, 9 entspricht einer Stärke der Rahmenleisten 2 bis 5. Die Schubübertragungs-Leisten 12, 13 können als Holzbalken ausgeführt sein.

Entsprechende Schubübertragungs-Leisten können anliegend an den weiteren Rahmenleisten 3 bis 5 vorhanden sein. Die Schubübertragungs-Leisten 12, 13 können beim Herstellungsprozess des Versteifungsrahmens der Tragstruktur 1 und insbesondere beim Herstellungsprozess der individuellen Rahmenleisten 2 bis 5 direkt beiderseits der jeweiligen Rahmenleisten 2 bis 5 angebunden werden. Eine beim Herstellungsprozess schmelzflüssige Polymermatrix der Rahmenleisten 2 bis 5 kann hierbei einen stoffschlüssigen Verbund zu den Schubübertragungsleisten 12, 13 herstellen.

Die Faserverbund-Rahmenleisten 2 bis 5 sind als Hohlprofil-Leisten ausgeführt, wie am Beispiel der Rahmenleiste 2 in der Fig. 2 dargestellt. Die Hohlprofil-Gestaltung der anderen Rahmenleisten 3 bis 5 entspricht derjenigen der Rahmenleiste 2. Die Profilgestaltung der Rahmenleiste 2 hat zwei Hohlkammern 14, 15. Die Hohlkammern 14, 15 können mit Material gefüllt sein, beispielsweise mit Schalldämmmaterial.

Eine Profil-Wandstärke P (vgl. Fig. 2) der Rahmenleisten 2 bis 5 kann im Bereich zwischen 1 mm und 15 mm und insbesondere im Bereich von 5 mm liegen.

Ein Mittelsteg zwischen den Hohlkammern 14 und 15 kann eine Stegstärke im Bereich von 10 mm aufweisen.

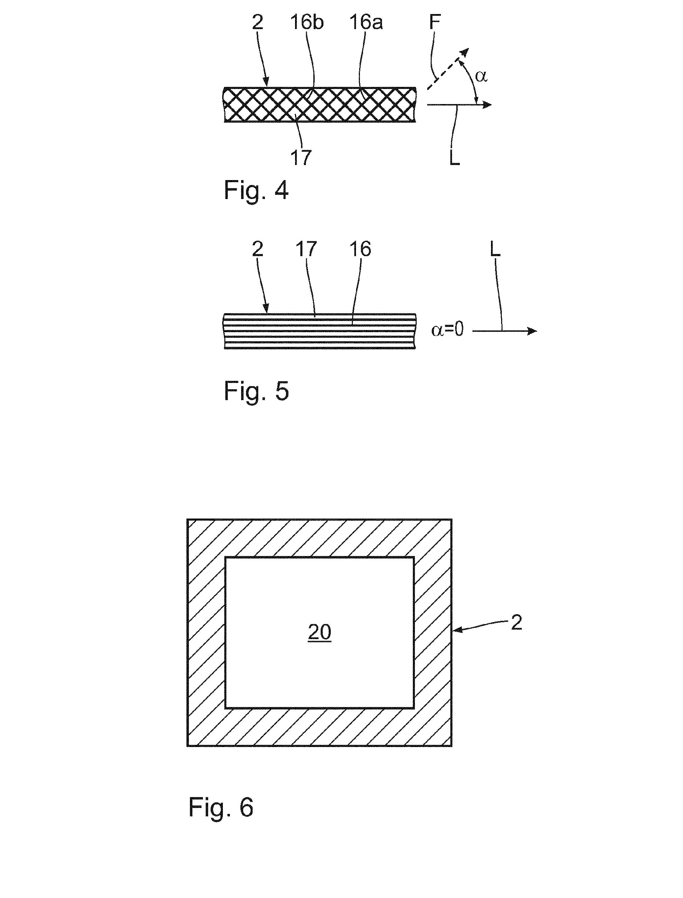

Die Rahmenleisten 2 bis 5 haben eine Faserverstärkung, die gebildet ist aus Endlosfasern 16. Die Endlosfasern 16 sind als Glasfasern ausgebildet. Anhand der Fig. 4 und 5 werden zwei Varianten einer solchen Endlos-Faserverstärkung nachfolgend beschrieben.

Fig. 4 zeigt eine + 45°/-45°-Faserverstärkung. Die Rahmenleiste 2 ist entsprechend mehrschichtig aufgebaut, wobei ein Schichttyp eine Endlos-Faserverstärkung mit +45°-Endlosfasern 16a und ein anderer Schichttyp eine Endlos-Faserverstärkung mit -45°-Endlosfasern 16b aufweist. Ein Faserwinkel α wird dabei zwischen der jeweiligen Längsrichtung F der Endlosfasern 16 und einer Längsrichtung L der Rahmenleiste 2 bis 5 gemessen. Alternativ zu einer solchen +45°/-45°-Schichtstruktur kann die jeweilige Rahmenleiste 2 bis 5 auch eine sonstige +α/-α-Schichtstruktur der Endlos-Faserverstärkung aufweisen, wobei α im Bereich zwischen 20° und 70°, insbesondere im Bereich zwischen 30° und 60°, insbesondere im Bereich zwischen 40° und 50° liegen kann.

Fig. 5 zeigt eine weitere Variante für die Endlos-Faserverstärkung der Rahmenleisten, die wiederum am Beispiel der Rahmenleiste 2 beschrieben wird. Die Endlos-Faserverstärkung nach Fig. 5 ist als unidirektionale Verstärkung mit Endlosfasern 16 mit Faserwinkel α = 0 ausgeführt. Die Endlosfasern 16 verlaufen bei der Rahmenleiste 2 nach Fig. 5 also in der Längsrichtung L der Rahmenleiste 2.

Eine weitere Variante für die Endlos-Faserverstärkung der Rahmenleisten kann eine Kombination der Faserrichtungen der Endlos-Faserverstärkungen nach den Figuren 4 und 5 darstellen. Eine solche Kombination kann beispielsweise als +45°/0°/-45°-Schichtstruktur ausgeführt sein. Auch andere Schichtabfolgen einer oder mehrerer 0°-Schichtstrukturen, einer oder mehrerer +45°-Schichtstrukturen und/oder einer oder mehrerer -45°-Schichtstrukturen sind möglich, zum Beispiel 0°/45°/-45° oder +45°/-45°/0°.

Der Faservolumengehalt kann bei den Rahmenleisten 2 bis 5 zwischen 35 Volumenprozent und 60 Volumenprozent liegen, vorzugsweise zwischen 50 Volumenprozent und 60 Volumenprozent, besonders vorzugsweise bei 56 Volumenprozent.

Die Endlosfasern 16 sind eingebettet in eine die Endlosfasern 16 umgebende Matrix 17. Diese Matrix 17 ist aus einem thermoplastischen Polymer. Bei den dargestellten Ausführungen ist die Matrix 17 ein Styrol-Acrylnitril (SAN). Weitere Beispiele für thermoplastische Matrix-Polymere sind Polypropylen-(PP), Polyethylenterephthalat-(PBT), Acrylnitril-Butadien-Stysrol-(ABS), thermoplastische Polyuretan-Polymer-(TPU), Polycarbonat-(PC) oder Polymethylmethacrylat-(PMMA) Harze. Auch Mischungen dieser Polymere sind möglich, z.B. SAN/PC.

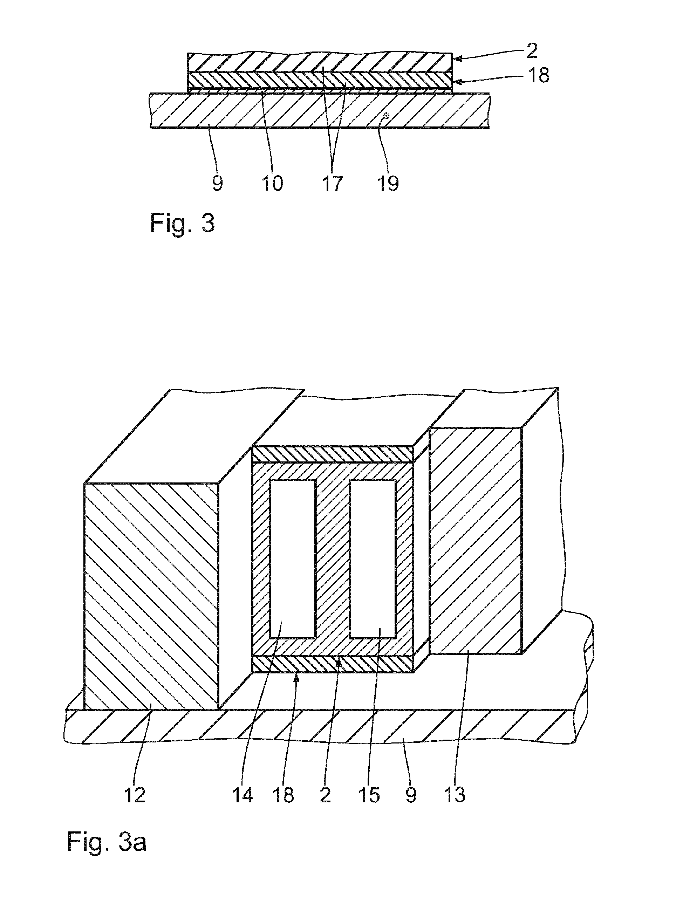

Die Faserverbund-Rahmenleisten 2 bis 5 können zusätzliche Kohlefaser-Verstärkungsprofilelemente 18 aufweisen. Dies wird nachfolgend anhand der Fig. 3 und 3a näher erläutert. Die Kohlefaser-Verstärkungsprofilleisten 18 sind nach Art von Ober-und Unter-Gurten in das Profil der Rahmenleisten 2 bis 5 eingesetzt und über die jeweilige Verbundmatrix 17 miteinander stoffschlüssig verbunden. Auch ein Haftvermittler zwischen der jeweiligen Rahmenleiste 2 bis 5 und dem jeweiligen Verstärkungsprofil 18 kann zum Einsatz kommen. Eine Verklebung der Rahmenleisten 2 bis 5 mit den Deckplatten 8 und 9 findet dann über die Verstärkungsprofile 18 und wiederum die Klebeschicht 10 statt, wie in der Fig. 3 dargestellt. Die Rahmenprofile 2 bis 5 können einstückig direkt im Verbund mit den Verstärkungsprofilen 18 als außenliegende Laminatschichten mit Faserwinkel α = 0° zusammen mit der Herstellung der Faserverbund-Rahmenleisten 2 bis 5 hergestellt werden. An die Kohlefaser-Verstärkungsprofilelemente 18 direkt angrenzende Schichten der Faserverbund-Rahmenleisten 2 bis 5 können dabei ein +45°/-45°-Laminatschichtenpaar darstellen.

Die Verstärkungsprofile 18 haben wiederum als Endlosfasern ausgestaltete Kohlefasern 19 zur Verstärkung. In der Fig. 3 ist lediglich schematisch ein Bündel mit derartigen Kohlefasern 19 angedeutet. Die Kohlefasern 19 sind wiederum als Endlosfasern ausgebildet. Die Kohlefasern 19 verlaufen unidirektional. Für Faserwinkel-Varianten α zwischen der Ausrichtung der Kohlefasern 19 und einer Längserstreckung des jeweiligen Verstärkungsprofils 18 gilt, was vorstehend zur Faserrichtung α im Zusammenhang mit den Endlosfasern 16 schon ausgeführt wurde.

Anhand der Fig. 6 wird nachfolgend eine weitere Hohlprofil-Ausführung für die Rahmenleisten 2 bis 5 am Beispiel der Rahmenleiste 2 beschrieben. Die Rahmenleiste 2 nach Fig. 6 ist als Einkammer-Hohlprofil mit einem einzigen Hohlraum 20 ausgeführt.

## Patentansprüche

1. Plattenförmige Tragstruktur (1)
- mit um einen Tragstruktur-Zentralbereich (6) umlaufenden Faserverbund-Rahmenleisten (2 bis 5) aus faserverstärktem Kunststoff,
- wobei die Faserverbund-Rahmenleisten (2 bis 5) in einer gemeinsamen Plattenebene in einem Kernbereich (7) der Tragstruktur (1) liegen,
- wobei der Kernbereich (7) der Tragstruktur (1) beiderseits abgedeckt ist von Deckplatten (8, 9), die sowohl den Zentralbereich (6) als auch die Faserverbund-Rahmenleisten (2 bis 5) abdecken,
- wobei die Deckplatten (8, 9) kraftübertragend mit den Rahmenleisten (2 bis 5) verbunden sind.

2. Tragstruktur nach Anspruch 1, **dadurch gekennzeichnet, dass** die Faserverbund-Rahmenleisten (2 bis 5) eine Endlos-Faserverstärkung (16; 16, 19) aufweisen.

3. Tragstruktur nach Anspruch 1 oder 2, **dadurch gekennzeichnet, dass** die Faserverbund-Rahmenleisten (2 bis 5) zusätzliche Kohlefaser-Verstärkungsprofilelemente (18) aufweisen.

4. Tragstruktur nach einem der Ansprüche 1 bis 3, **dadurch gekennzeichnet, dass** anliegend an zumindest eine der Faserverbund-Rahmenleisten (2 bis 5) zwei Schubübertragungs-Leisten (12, 13) angeordnet sind, die die Faserverbund-Rahmenleisten (2 bis 5) in der Plattenebene zwischen sich aufnehmen.

5. Tragstruktur nach einem der Ansprüche 1 bis 4, **dadurch gekennzeichnet, dass** die Faserverbund-Rahmenleisten (2 bis 5) als Hohlprofil-Leisten ausgeführt sind.

6. Tragstruktur nach einem der Ansprüche 1 bis 5, **dadurch gekennzeichnet, dass** die Faserverbund-Rahmenleisten (2 bis 5) eine die Fasern (16; 16, 19) umgebende Matrix (17) aus einem thermoplastischen Polymer aufweisen.

7. Tragstruktur nach einem der Ansprüche 1 bis 6, **dadurch gekennzeichnet, dass** die Faserverbund-Rahmenleisten (2 bis 5) vollflächig mit den Deckplatten (8, 9) verklebt sind.

8. Tragstruktur nach einem der Ansprüche 1 bis 7 , **dadurch gekennzeichnet, dass** die Faserverbund-Rahmenleisten (2 bis 5) endseitig nicht in kraftübertragender Weise miteinander verbunden sind.

9. Tragstruktur nach einem der Ansprüche 1 bis 8, **dadurch gekennzeichnet, dass** sich die Rahmenleisten (2 bis 5) längs einer Gesamterstreckung der plattenförmigen Tragstruktur (1) erstrecken.
